# FASCICULE DE BREVET EUROPEEN

(11) **EP 3 871 285 B1**
(45) Date de publication et mention de la délivrance du brevet: **23.11.2022**
(21) Numéro de dépôt: 19813101.3
(22) Date de dépôt: 23.10.2019
(51) Int. Cl.: H01M 8/04701, C25B 15/02, C25B 1/04, H01M 8/04007, H01M 8/248, H01M 8/12, C25B 9/73, C25B 9/77, H01M 8/2428

(54) **PROCÉDÉ DE RÉGULATION THERMIQUE D'UN SYSTEME ÉLECTROCHIMIQUE A OXYDES SOLIDES A MOYENS DE CHAUFFAGE INTÉGRÉS**
VERFAHREN ZUR TEMPERATURREGELUNG EINES ELEKTROCHEMISCHEN FESTOXIDSYSTEMS MIT INTEGRIERTER HEIZVORRICHTUNG
METHOD FOR TEMPERATURE CONTROL OF A SOLID OXIDE ELECTROCHEMICAL SYSTEM HAVING INTEGRATED HEATING MEANS

(30) Priorité: 26.10.2018 FR 1859931
(43) Date de publication de la demande: 01.09.2021
(73) Titulaire: Commissariat à l'énergie atomique et aux énergies alternatives, 75015 Paris (FR)
(72) Inventeur: BERNARD, Charlotte, 38054 GRENOBLE CEDEX 09 (FR); AICART, Jérôme, 38054 GRENOBLE CEDEX 09 (FR); MOUGIN, Julie, 38054 GRENOBLE CEDEX 09 (FR); PALCOUX, Géraldine, 38054 GRENOBLE CEDEX 09 (FR)
(74) Mandataire: Brevalex
(86) Numéro de dépôt international: PCT/FR2019/052533
(87) Numéro de publication internationale: WO 2020/084257

(56) Documents cités:
- EP-A1- 2 980 904
- FR-A1- 2 985 522
- US-A- 3 623 913

## Description

### DOMAINE TECHNIQUE ET ÉTAT DE LA TECHNIQUE ANTÉRIEURE

La présente invention se rapporte à un procédé de régulation thermique d'un système électrochimique comportant au moins un dispositif électrochimique comprenant un empilement des cellules électrochimiques, par exemple à oxydes solides fonctionnant à haute température, et des moyens de chauffage intégrés à l'empilement.

Le dispositif électrochimique est mis en œuvre pour l'électrolyse à haute température et comporter un empilement de cellules d'électrolyseur à oxyde solide ou SOEC (solid oxide electrolyzer cell en terminologie anglo-saxonne) ou en tant que pile à combustible et comporter un empilement de cellules à combustible à oxyde solide ou SOFC (Solid oxide fuel cell en terminologie anglo-saxonne).

Un tel dispositif comporte un empilement de cellules électrochimiques enserrées entre deux plaques de serrage.

Chaque cellule comporte un électrolyte entre deux électrodes. Des plaques d'interconnexion sont interposées entre les cellules et assurent la connexion électrique entre les cellules. En outre les plaques d'interconnexion assurent l'alimentation en gaz des cellules et la collecte des gaz produits au niveau de chaque cellule.

En fonctionnement, l'anode et la cathode sont le siège de réactions électrochimiques, tandis que l'électrolyte permet le transport d'ions de la cathode vers l'anode, ou inversement suivant que le dispositif électrochimique fonctionne en mode électrolyseur ou en mode pile à combustible.

Ainsi en mode électrolyseur, le compartiment cathodique permet un apport de vapeur d'eau et une évacuation des produits de réduction de l'eau, notamment de l'hydrogène, tandis que le compartiment anodique assure, via un gaz drainant, l'évacuation du dioxygène produit de l'oxydation des ions O²⁻ migrant de la cathode vers l'anode.

Le mécanisme d'électrolyse (mode « SOEC ») de la vapeur d'eau par une cellule électrochimique élémentaire est décrit ci-dessous. Au cours de cette électrolyse, la cellule électrochimique élémentaire est alimentée par un courant circulant de la cathode vers l'anode. La vapeur d'eau distribuée par le compartiment cathodique est alors réduite sous l'effet du courant selon la demi-réaction suivante :

2 H₂O + 4 e⁻ → 2 H₂ + 2 O²⁻.

Le dihydrogène produit lors de cette réaction est alors évacué, tandis que les ions O²⁻ produits lors de cette réduction migrent de la cathode vers l'anode, via l'électrolyte, où ils sont oxydés en dioxygène selon la demi-réaction :

202⁻ → O₂ + 4 e⁻.

Le dioxygène ainsi formé est quant à lui évacué par le gaz drainant circulant dans le compartiment anodique.

L'électrolyse de la vapeur d'eau répond à la réaction suivante :

2 H₂O → 2 H₂ + O₂.

En mode pile à combustible (« SOFC »), de l'air est injecté dans le compartiment cathodique qui se dissocie en ions O²⁻. Ces derniers migrent vers l'anode et réagissent avec du dihydrogène circulant dans le compartiment anodique pour former de l'eau.

Le fonctionnement en mode pile à combustible permet la production d'un courant électrique.

Les plaques de serrage exercent un effort de serrage sur l'empilement afin d'assurer un bon contact électrique entre les plaques d'interconnexion et les cellules et une étanchéité de l'empilement.

Les températures de fonctionnement des systèmes SOEC/SOFC sont généralement comprises entre 600°C et 1000°C.

Ces températures sont obtenues en disposant l'empilement dans un four de forte puissance. Le four comporte une enceinte et par exemple des résistances électriques sur les faces intérieures des parois de l'enceinte. Il présente donc un certain encombrement. Le transfert thermique entre les résistances électriques et l'empilement se fait par convection et par rayonnement. Une instrumentation est prévue dans l'espace délimité entre le four et le dispositif pour suivre et réguler la température.

Le système de production d'hydrogène ou de production d'électricité comporte donc un four et le dispositif électrochimique.

Le chauffage dans un four ne permet pas de réguler finement la température de l'empilement et ne permet pas non plus de tenir compte de différences de performances dans le fonctionnement des cellules électrochimiques.

En outre un balayage de gaz est réalisé dans le four pour des raisons de sécurité, ce qui perturbe le transfert par convection. Par ailleurs, le transfert thermique par rayonnement est dépendant des dimensions de l'enceinte, plus une enceinte est grande plus le transfert thermique par rayonnement s'en trouve impacté.

Le document WO2017102657 décrit un exemple de dispositif électrochimique comportant un empilement de cellules à oxyde solide maintenu par un système de serrage du type « plug and play », c'est-à-dire aisément connectables aux circuits d'alimentation et de collecte de gaz. Le système de serrage est conçu pour assurer un niveau de serrage sensiblement constant malgré les variations de température. Le dispositif électrochimique est disposé dans un four.

Document EP 2 980 904 A1 décrit une pile à combustible comprenant un dispositif d'échange de chaleur.

### EXPOSÉ DE L'INVENTION

C'est par conséquent un but de la présente invention d'offrir un procédé de régulation d'un système électrochimique comportant un empilement de cellules électrochimiques selon la revendication indépendante permettant une régulation optimisée de la température de l'empilement.

Le but énoncé ci-dessus est atteint par un procédé de régulation d'un *système comportant un dispositif électrochimique comprenant un empilement de cellules* électrochimiques et de plaques d'interconnexion interposées entre les cellules, et des moyens de chauffage intégrés à l'empilement, les moyens de chauffage comportant au moins deux éléments chauffants disposés chacun à un emplacement distinct de l'empilement. Le procédé de régulation commande chaque élément chauffant de manière séparée. Par exemple, l'un au moins des éléments chauffants délivre plus ou moins de chaleur que le ou les autres éléments chauffants afin de compenser des performances de fonctionnement réduites d'une ou plusieurs cellules, ou pour compenser des fuites thermiques. Selon un autre exemple, un au moins des éléments chauffants peut être commandé pour qu'il fournisse plus de chaleur pour réchauffer les gaz d'alimentation des cellules. Selon l'invention, on contrôle le gradient thermique à travers l'empilement.

Ce procédé de régulation permet d'atteindre plus facilement une température homogène de l'empilement, ce qui optimise le fonctionnement de l'ensemble du système

En d'autres termes, on peut réaliser une régulation thermique locale au sein de l'empilement en gérant séparément les éléments chauffants répartis dans l'empilement. Il est alors possible d'adapter les apports de chaleur en différents points de l'empilement en fonction des besoins.

Les éléments chauffants sont électriques, par exemple comportant des câbles ou cordons électriques. La régulation différenciée des éléments chauffants peut alors être obtenue en gérant l'intensité des courants électriques alimentant chaque câble.

La présente invention a alors pour objet un procédé de régulation thermique d'un système électrochimique comprenant un empilement de n cellules électrochimiques, n étant un entier supérieur ou égal à 1, et au moins n-1 plaques d'interconnexion interposées entre les cellules électrochimiques, des moyens d'alimentation en gaz des cellules électrochimiques et des moyens de collecte de gaz produits par les cellules électrochimiques, des moyens de connexion électrique du système vers l'extérieur. Le dispositif électrochimique comporte également des moyens de chauffage intégrés à l'empilement, lesdits moyens de chauffage comportant au moins un premier et un deuxième élément chauffant, le premier élément chauffant étant disposé dans un premier emplacement de l'empilement et le deuxième élément chauffant étant disposé dans un deuxième emplacement de l'empilement, comportant :
l'application d'une première commande au premier élément chauffant et d'une deuxième commande au deuxième élément chauffant, lesdites première et deuxième commandes étant déterminées de sorte à maintenir un gradient thermique dans l'empilement dans la direction de l'empilement sensiblement à une valeur donnée.

De préférence les première et deuxième commandes varient au cours du fonctionnement du système. La valeur donnée formant consigne peut varier au cours du fonctionnement.

Par exemple, dans le cas où le premier emplacement est situé au niveau d'une extrémité de l'empilement par laquelle pénètrent des conduits d'alimentation en gaz des cellules, les gaz étant à une température à la température de fonctionnement du système, la première commande peut être telle que le premier élément génère une quantité de chaleur suffisante pour compenser la baisse de température due à l'alimentation en gaz et maintenir le gradient thermique sensiblement à la valeur donnée.

De préférence, la détermination de la première commande prend en compte la ou les températures des gaz d'alimentation et/ou leurs débits.

Dans un mode de fonctionnement avantageux, au moins dans une phase de démarrage du système, les première et deuxième commandes sont telles que les premier et deuxième éléments chauffants sont à la même température, jusqu'à ce que le système atteigne sa température de fonctionnement.

Selon une caractéristique additionnelle, la première et/ou la deuxième commande est ou sont déterminées et/ou modifiées en fonction de mesure de caractéristiques de fonctionnement du système.

Le procédé de régulation peut comporter :
l'étape de mesure des températures dans au moins deux zones distinctes de l'empilement,
l'étape de comparaison de la différence des températures des deux zones par rapport à une valeur seuil,
l'étape de détermination ou de modification de la première et/ou de la deuxième commande au vu de l'étape de comparaison.

La présente invention a également pour objet un système électrochimique comportant au moins un dispositif électrochimique selon revendication indépendante 8 comprenant un empilement de n cellules électrochimiques à oxydes solides, n étant un entier supérieur ou égal à 1, et au moins n-1 plaques d'interconnexion interposées entre les cellules électrochimiques, des moyens d'alimentation en gaz des cellules électrochimiques et des moyens de collecte de gaz produits par les cellules électrochimiques, des moyens de connexion électrique du système vers l'extérieur. Le dispositif électrochimique comporte également des moyens de chauffage intégrés à l'empilement, lesdits moyens de chauffage comportant au moins un premier et un deuxième élément chauffant, le premier élément chauffant étant disposé dans un premier emplacement de l'empilement et le deuxième élément chauffant étant disposé dans un deuxième emplacement de l'empilement, ledit système comportant également des moyens de commande configurés pour commander séparément le premier élément chauffant et le deuxième élément chauffant de sorte à permettre un apport de chaleur différent entre le premier emplacement et le deuxième emplacement.

Par exemple, les n cellules électrochimiques sont des cellules électrochimiques à oxydes solides.

De manière avantageuse, les éléments chauffants sont des éléments à effet Joule.

Les moyens de commande peuvent commander les éléments chauffants selon un mode prédéterminé lors de la conception du système électrochimique.

Le système électrochimique comporte avantageusement des moyens de mesure de la température dans au moins des première et deuxième zones distinctes de l'empilement. Les moyens de commande commandent les éléments chauffants de sorte à réduire le gradient thermique dans la direction de l'empilement.

Les premier et deuxième éléments chauffants sont par exemple disposés chacun dans une plaque, dite plaque de chauffage, disposée dans l'empilement ou sur l'empilement. Avantageusement les plaques de chauffage sont disposées chacune à une extrémité de l'empilement dans la direction de l'empilement.

Le système peut comporter deux plaques de serrage disposées chacune à une extrémité de l'empilement dans la direction de l'empilement et des moyens coopérant avec les plaques pour appliquer un effort de serrage aux n cellules et n-1 interconnexions.

Dans un exemple de réalisation, chaque plaque de chauffage est formée par une plaque de serrage.

Dans un autre exemple de réalisation, chaque plaque de chauffage est en appui contre une plaque de serrage, avantageusement contre sa face extérieure.

Le système électrochimique peut avantageusement comporter une enceinte isolante thermique définissant un espace intérieur recevant le dispositif électrochimique et l'isolant thermiquement de l'extérieur.

### BRÈVE DESCRIPTION DES DESSINS

La présente invention sera mieux comprise sur la base de la description qui va suivre et des dessins en annexe sur lesquels:
- la figure 1 est une vue en éclatée de système électrochimique qui peut être commandé par un procédé de régulation thermique selon l'invention
- la figure 2 est une vue en perspective d'un système électrochimique selon un exemple de réalisation, qui peut être commandé par un procédé de régulation thermique selon l'invention
- la figure 3A est une vue en perspective d'une plaque de serrage mise en œuvre dans le système de la figure 2, représentée seule,
- la figure 3B est une vue de détail d'une coupe de la plaque de serrage de la figure 3A au niveau d'un conducteur électrique,
- les figures 4A et 4B sont des vues en perspective d'une plaque de serrage selon une variante de réalisation pouvant être mise en œuvre dans le système de la figure 2,
- la figure 5 est une vue en perspective d'une plaque de serrage selon un autre exemple de réalisation pouvant être mise en œuvre dans le système de la figure 2,
- la figure 6 est une vue en perspective d'un système électrochimique selon un autre exemple de réalisation, qui peut être commandé par un procédé de régulation thermique selon l'invention
- les figures 7A à 7C sont différentes représentations schématiques des moyens de chauffage du système de la figure 6,
- la figure 8 est une représentation schématique d'une installation électrochimique mettant en œuvre un système selon l'invention.

### EXPOSÉ DÉTAILLÉ DE MODES DE RÉALISATION PARTICULIERS

La description qui va suivre décrit en détail des exemples de systèmes électrochimiques qui peuvent être commandés par un procédé de régulation thermique selon l'invention, mais l'invention peut s'appliquer à d'autres systèmes électrochimiques comme cela sera expliqué par la suite.

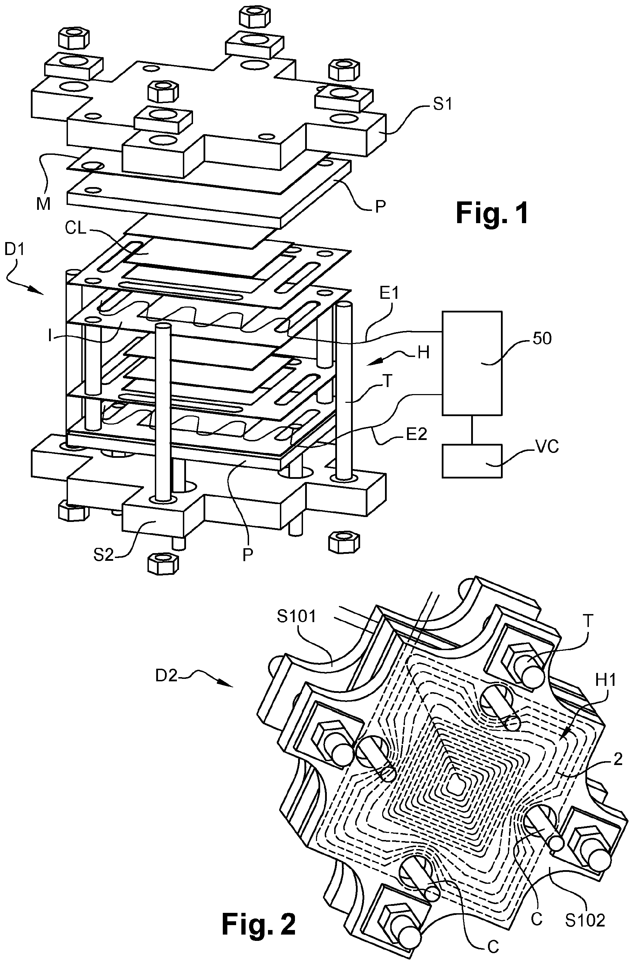

Sur la figure 1, on peut voir une vue en éclaté d'un exemple de réalisation d'un système électrochimique, qui peut être commandé par un procédé de régulation thermique selon l'invention.

Le système électrochimique comporte un dispositif électrochimique D1 destiné à être mis en œuvre pour l'électrolyse à haute température (mode « SOEC ») ou en tant que pile à combustible (mode « SOFC »).

Le dispositif électrochimique D1 comprend un empilement de cellules électrochimiques à oxydes solides.

L'empilement comprend une pluralité de cellules électrochimiques élémentaires CL formées chacune d'une cathode, d'une anode et d'un électrolyte disposé entre l'anode et la cathode. L'électrolyte est en un matériau conducteur d'ions solide et dense, et l'anode et la cathode sont des couches poreuses.

L'empilement comporte en outre des plaques d'interconnexion ou interconnecteurs I, chacun interposé entre deux cellules élémentaires successives et assurant la connexion électrique entre une anode d'une cellule élément et une cathode de la cellule élément adjacente. Les interconnecteurs I assurent une connexion en série des cellules élémentaires.

Un empilement peut comporter entre une cellule et plusieurs centaines de cellules, de préférence entre 25 cellules et 75 cellules.

Les interconnecteurs intermédiaires délimitent également des compartiments fluidiques au niveau de la surface des électrodes avec lesquelles il sont en contact.

La face d'un interconnecteur intermédiaire I en contact avec une anode d'une cellule électrochimique élémentaire CL délimite un compartiment, dit compartiment anodique, et la face d'un interconnecteur I en contact avec une cathode d'une cellule électrochimique élémentaire CL délimite un compartiment, dit compartiment cathodique.

Chacun des compartiments anodique et cathodique permet la distribution et la collecte desdits gaz.

Par exemple, pour l'électrolyse de l'eau, le compartiment cathodique assure une alimentation en vapeur d'eau de la cathode et l'évacuation de l'hydrogène produit. Le compartiment anodique assure la circulation d'un gaz drainant et l'évacuation de l'oxygène produit au niveau de l'anode.

Le dispositif électrochimique peut comporter des plaques terminales P disposées de part et d'autre de l'empilement. Les plaques terminales sont conductrices électriques.

Le dispositif comporte également des tubes (non représentés) pour distribuer les gaz et des tubes pour collecter les gaz.

Dans l'exemple représenté, le dispositif électrochimique D1 comprend également un système de serrage S1, S2 pourvu de deux plaques de serrage, dites respectivement, première plaque de serrage ou plaque de serrage supérieure S1 et seconde plaque de serrage ou plaque de serrage inférieure S2 disposées de part et d'autre de l'empilement dans la direction de l'empilement et destinées à exercer un effort de serrage sur l'empilement par l'intermédiaire de tirants T.

Selon cette configuration, chaque plaque terminale P est isolée électriquement de la plaque de serrage qui lui est adjacente, en interposant une plaque M d'isolation électrique, par exemple en mica, entre chaque plaque de serrage et chaque plaque terminale.

Les tirants T sont par exemple formés par des tiges de serrage traversant les plaques de serrage et sur les extrémités desquelles sont montés des écrous. Ces moyens sont, à cet égard, décrits dans le document FR 3 045 215.

De manière avantageuse, les plaques de serrage S1, S2 peuvent être réalisées en acier inoxydable, de manière très avantageuse en acier austénitique réfractaire, par exemple de type AISI 310S, présentant un coefficient de dilatation thermique égal à 18,5.10⁻⁶ entre 20°C et 800°C. En outre, cet acier offre une bonne résistance mécanique jusqu'à 1000°C.

Les tirants sont par exemple en superalliage à base de nickel de type Inconel 625.

La combinaison de ces matériaux permet de compenser la différence de dilatation ente les tiges de serrage et les cellules électrochimiques par la dilatation importante des plaques de serrage. De manière avantageuse des rondelles, dans le même matériau que les plaques de serrage, sont interposées entre les plaques de serrage et les écrous.

L'une et/ou l'autre des deux plaques de serrage S1, S2 est ou sont pourvues d'au moins un conduit de circulation des gaz qui permet la circulation de gaz d'une entrée de gaz vers une sortie de gaz afin d'alimenter en gaz ou à évacuer des gaz de l'empilement à oxydes solides.

L'entré et la sortie de gaz sont disposées, respectivement, sur l'une et l'autre des faces de plus grande surface de la plaque de serrage S1, S2.

Le dispositif électrochimique comporte également des moyens de chauffage H intégrés à l'empilement. Sur la figure 1, ces moyens H sont représentés schématiquement.

Dans la présente, on entend par « moyens de chauffage intégrés », des moyens de chauffage en contact mécanique direct avec l'empilement. Ils sont disposés sur et/ou dans l'empilement. Les moyens de chauffage sont montés dans des éléments de l'empilement déjà existants ou dans des éléments rajoutés à l'empilement.

Dans cet exemple, les moyens de chauffage H1 sont des moyens de chauffage électriques par effets Joule. Ils comportent au moins deux éléments chauffants E1, E2 intégrés à au moins deux emplacements distincts dans la hauteur de l'empilement.

Par exemple les éléments chauffants E1, E2 sont des câbles ou cordons conducteurs électriques 2 intégrés dans l'empilement et qui génèrent de la chaleur par dissipation. Dans la suite de la description, on utilisera « câble », « câble électrique » ou « câble chauffant » pour désigner les câbles conducteurs électriques formant les moyens de chauffage. Par exemple, les câbles chauffants comportent une âme chauffante à isolant minéral, magnésie MgO (96-99%), sous gaine inconel 600 et de terminaisons froides intégrées. L'âme chauffante a par exemple un diamètre de 2,0 mm +/-0,05 mm sur une longueur de 6,5 m +/-5%, présentant une résistance interne de 7,0 ohms /m +/-10%.

De préférence, les éléments chauffants E1, E2 sont positionnés dans l'empilement de sorte à permettre un contrôle facilité de la ou des températures dans tout l'empilement. De manière préférée, ils sont disposés au niveau des extrémités de l'empilement dans la direction de l'empilement, ce qui permet de maîtriser le gradient thermique sur toute la hauteur de l'empilement.

Chaque élément chauffant est connecté à une source d'alimentation 5O électrique de sorte à pouvoir être commandé indépendamment de l'autre câble, et ainsi permettre un apport de chaleur différencié par chaque élément chauffant. Par exemple on peut envisager que les deux éléments chauffants soient connectés à la même source d'alimentation et que des moyens de modulation du courant soient prévus au niveau de chaque élément chauffant. En variante chaque élément chauffant est connecté à sa propre source d'alimentation électrique qui est régulée.

Les moyens de chauffage sont commandés par une unité de commande VC, par exemple un ordinateur, par exemple sur la base des mesures fournies par les thermocouples, la ou les consignes de température et/ou des modes de fonctionnement prédéterminés comme cela sera décrit ci-dessous.

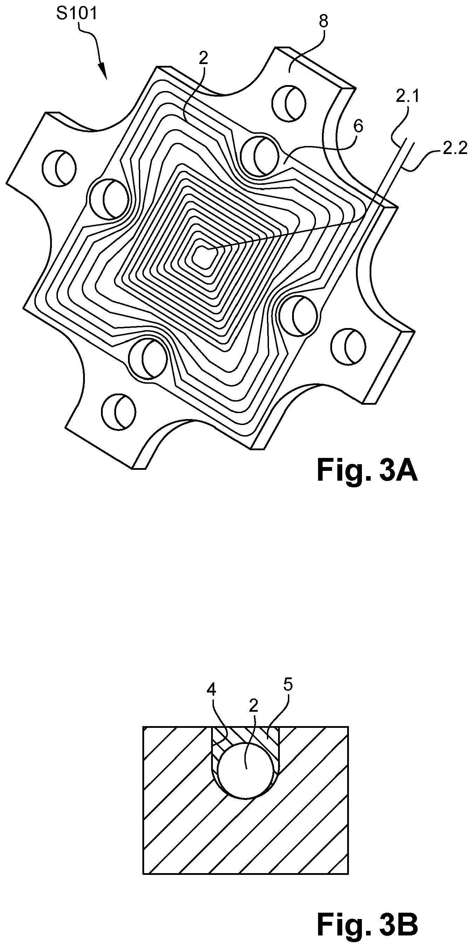

Sur les figures 2, 3A et 3B, on peut voir un exemple de réalisation pratique avantageux d'un système électrochimique comportant un dispositif électrochimique D2. Dans cet exemple, les moyens de chauffage H1 sont présents dans les deux plaques de serrage S101, S102.

Les plaques de serrage sont réalisées dans un matériau apte à conduire la chaleur en direction de l'empilement. De préférence le matériau présente une bonne conductivité thermique, de préférence au moins égale à 10W/m.K. L'acier AISI 310S présente avantageusement une bonne conductivité thermique, 15W/m.K à 20°C et 19 W/m.K à 500°C.

Dans cet exemple et comme cela est représenté sur la figure 3B, un évidement 4 est formé dans une des faces de plus grande surface d'une plaque de serrage S101, dont la profondeur est suffisante pour recevoir le câble électrique 2. De préférence, la profondeur de l'évidement 4 est suffisante pour que le câble 2 ne fasse pas saillie de la plaque. Le câble est immobilisé dans l'évidement 4 par l'ajout d'un matériau par exemple brasure 5, par exemple réalisée sous vide. De préférence, le matériau de la brasure est le même que celui de la plaque de serrage afin d'éviter les risques de dilatation différentielle.

De préférence, la brasure est disposée du côté de l'empilement. Ainsi la zone de chauffe est située au plus près de l'empilement.

Dans cet exemple le conducteur est disposé sous la forme d'une spirale carrée.

De manière très avantageuse, le câble électrique est reparti sur une surface correspondant à la surface des cellules électrochimiques afin d'optimiser le chauffage du dispositif. Dans l'exemple représenté, la plaque de serrage S101 comporte une partie principale 6 de forme carrée et des branches 8 en saillie de chaque côté de la partie principale pour le passage des tirants. Le câble électrique s'étend sur toute la surface de la partie principale quasiment jusqu'aux bords de celle-ci. Dans cet exemple, le câble électrique est réparti uniformément sur la surface, assurant une répartition uniforme du chauffage sur toute la surface de l'empilement.

Les extrémités de connexion 2.1, 2.2 du câble sortent latéralement de la plaque de serrage pour se raccorder électriquement au reste du système.

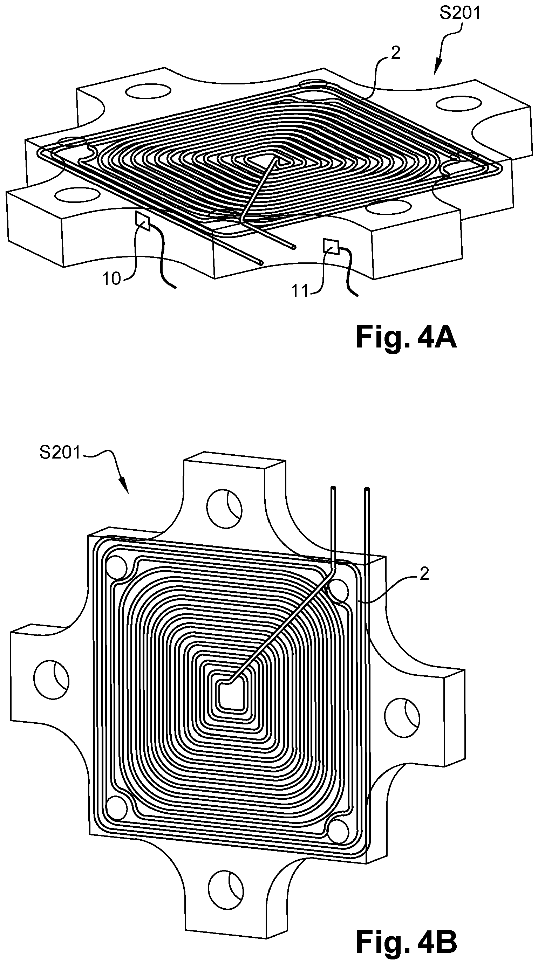

Sur les figures 4A et 4B, on peut voir une variante de réalisation d'une plaque de serrage S201 dans laquelle le câble électrique 2 présente une autre distribution.

Toute autre distribution du câble électrique est envisageable.

En fonctionnement endothermique, il apparaît une perte de chaleur importante au cœur de l'empilement. De préférence, la plaque présente une densité élevée de conducteur électrique au centre de la plaque pour fournir une quantité de chaleur supérieure au centre de la plaque relativement aux bords de celle-ci.

L'évidement est par exemple réalisé par usinage.

A titre d'exemple, les plaques de serrage ont des dimensions dans le plan par exemple quelques centaines de mm, par exemple 200 mm x 200 mm et une épaisseur un à plusieurs dizaines de mm, par exemple 10 mm.

Dans les exemples représentés, un seul câble électrique par plaque est mis en œuvre, ce qui simplifie la connexion à la source de courant. Néanmoins on peut envisager de mettre plusieurs câbles par plaque répartis dans un plan ou dans plusieurs plans. La mise en œuvre de plusieurs câbles présente l'avantage, dans le cas où un câble est défectueux, de permettre de continuer à fournir de la chaleur à l'empilement, d'autant plus qu'en général il n'est pas possible de retirer les plaques de serrage, la charge appliquée par celles-ci via les tirants ne pouvant pas être annulée sans rendre le dispositif inopérant.

De manière avantageuse, un ou des capteurs de température 10, 11, par exemple des thermocouples représentés sur la figure 4B, sont disposés dans chaque plaque de serrage. De préférence deux capteurs de température sont mis en œuvre, un capteur de température de sécurité 10 disposé au plus près du câble chauffant afin de contrôler la température du câble, et d'éviter sa surchauffe et sa dégradation, et un capteur de température 11 destiné à la régulation et disposé de sorte à mesurer la température de la plaque, le capteur de régulation est disposé plus éloigné du câble chauffant, par exemple à quelques millimètres.

L'intégration de moyens de chauffage au plus près des cellules permet de maîtriser l'énergie qui est effectivement apportée à l'empilement. En outre, il n'y a plus de pertes thermiques par rayonnement entre le four et le dispositif. Le chauffage est donc plus efficace.

En outre dans l'exemple particulier de la figure 2, l'intégration du ou des câbles dans les plaques de serrage permet de ne pas modifier l'encombrement du dispositif électrochimique et donc de permettre à celui-ci de remplacer des dispositifs déjà en place.

Cependant, malgré la plus grande efficacité dans le chauffage de l'empilement obtenu par l'intégration des moyens de chauffage, il peut apparaître un gradient thermique dans l'empilement qui peut être dommageable au bon fonctionnement du système.

Selon l'invention, chaque élément chauffant intégré aux plaques de serrage peut être commandé séparément de sorte à permettre un apport de chaleur déterminé en fonction, par exemple, de l'emplacement de l'élément chauffant dans l'empilement et/ou du mode de fonctionnement choisi et/ou des caractéristiques de fonctionnement du système électrochimique.

Ainsi le système peut être commandé de sorte que la quantité de chaleur fournie par l'élément chauffant dans la plaque de serrage S101 soit différente de, ou identique à, celle fournie par l'élément chauffant dans la plaque de serrage S102.

Par exemple, lors de la mise en route du système, les deux éléments chauffants sont commandés de sorte à apporter la même quantité de chaleur afin d'avoir une température homogène sur toute la hauteur de l'empilement et supprimer le gradient thermique entre les deux plaques terminales. Ce mode de fonctionnement peut être maintenu jusqu'à ce que l'empilement atteigne la température de fonctionnement.

Selon un autre exemple, les deux éléments chauffants sont commandés de sorte à fournir des quantités de chaleur différentes et à établir un gradient de température au sein de l'empilement afin de compenser un gradient de température apparu lors du fonctionnement des cellules.

Le gradient de température maximal est de l'ordre de plusieurs dizaines de degré, par exemple 50°C, voire 100°C.

Par exemple, si une ou des cellules de l'empilement présentent des performances réduites par rapport à d'autres cellules, la température ou niveau de cette ou ces cellules peut être différente de la température au niveau des cellules plus performantes, le ou les éléments chauffants au niveau de la ou des cellules moins performantes est ou sont commandés pour compenser la différence de température, et permettre d'atteindre une température homogène dans tout l'empilement.

L'apport de quantités de chaleur différentes par les éléments chauffants peut également être commandé lorsqu'une portion de l'empilement subit plus de perte thermique qu'une autre.

Par ailleurs, le système comporte des conduits d'alimentation C en gaz des cellules électrochimiques. Or les gaz pénétrant dans le système sont généralement à une température inférieure à la température de fonctionnement du système, par exemple de l'ordre de 500°C. Les conduits pénètrent dans l'empilement en général à une extrémité de celui-ci, l'arrivée des gaz tend alors à créer un gradient de température au sein de l'empilement. Le procédé de régulation selon l'invention permet de contrer l'apparition de ce gradient thermique en commandant l'élément chauffant situé au plus près de l'arrivée des gaz d'alimentation pour réchauffer ceux-ci avant qu'ils ne pénètrent dans l'empilement.

Sur la figure 2, les conduits C traversent la plaque de serrage S102. L'élément chauffant E1 disposé dans cette plaque de serrage est commandé pour générer plus de chaleur que l'élément chauffant dans la plaque de serrage S101, afin de compenser le puit thermique formé par les gaz d'alimentation.

La gestion différenciée des éléments chauffants permet d'homogénéiser plus finement la température de l'empilement et ainsi, d'une part d'optimiser le rendement du système par l'homogénéisation des performances de cellules, et d'autre part de préserver l'empilement des contraintes mécaniques engendrées par les gradients thermiques.

La gestion différenciée permet en outre de prendre en compte le caractère exothermique de certains modes de fonctionnement dans la commande des éléments chauffants. Dans ces modes de fonctionnement un gradient de température apparaît dans l'empilement qui peut être avantageusement compensé en commandant les éléments chauffants de manière adaptée.

En outre, il a été constaté que au sein de l'empilement même, des zones pouvaient avoir un fonctionnement endothermique et d'autres pouvaient avoir un fonctionnement exothermique, par exemple l'extrémité supérieure de l'empilement peut avoir une fonction exothermique et l'extrémité inférieure de l'empilement peut avoir un fonctionnement endothermique. En commandant chaque élément chauffant séparément, il est possible d'adapter l'apport thermique au besoin local de l'empilement.

Le mode de régulation de chacun des éléments chauffants peut être préétabli par l'expérimentation et/ou la simulation de manière à maximiser les rendements du système tout en préservant l'intégrité de l'empilement. Par exemple, la commande de l'élément de chauffage pour réchauffer les gaz d'alimentation peut être établie lors de la conception du système, le débit et la température des gaz d'alimentation étant sensiblement constante. L'unité de commande peut alors être programmée pour commander l'élément chauffant de sorte qu'il génère systématiquement une quantité de chaleur donnée plus importante que l'autre élément chauffant.

Dans un autre exemple, le mode de régulation peut tenir compte de mesures en temps réel de caractéristiques de fonctionnement de l'empilement au cours du fonctionnement de celui-ci et générer des ordres aux éléments chauffants sur cette base.

Par exemple des mesures de température au sein de l'empilement permettent de détecter l'existence d'un gradient thermique. Les éléments chauffants sont alors commandés pour compenser ce gradient thermique. D'autres caractéristiques du système peuvent être prises en compte pour commander les éléments chauffants. Par exemple, il peut s'agir des caractéristiques courant/tension de une, plusieurs, ou toutes les cellules de l'empilement. Des moyens de mesure de température sont alors intégrés au sein de l'empilement.

Pour le réchauffage des gaz, il peut être prévu de lier la commande au débit des gaz d'alimentation et/ou leur température en entrée.

Ainsi l'apport de chaleur en différents endroits de l'empilement peut être ajusté au cours du fonctionnement du système de manière préétablie et/ou en continue. On peut envisager une gestion appliquant, dans un premier temps, un mode préétabli, par exemple pour atteindre la température de fonctionnement et dans un deuxième temps un mode ajustable en fonction des caractéristiques mesurées.

En outre, le mode de régulation dépend avantageusement du mode de fonctionnement du système, i.e. s'il fonctionne en mode SOFC ou SOEC.

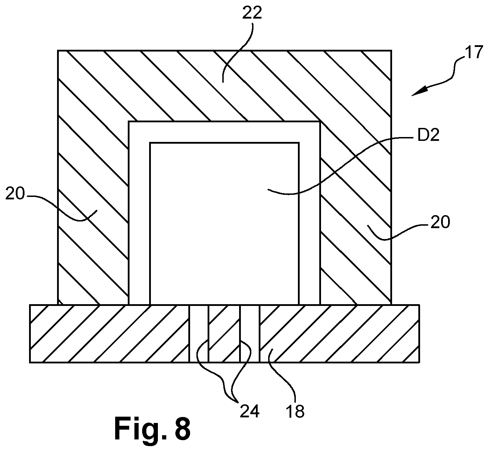

De plus, au cours du fonctionnement on peut envisager de ne faire fonctionner que l'un des éléments chauffants, notamment dans le cas d'un système mettant une enceinte isolante thermique dans laquelle est isolé le dispositif électrochimique comme cela sera décrit ci-dessous en relation avec la figure 8. Par exemple, dans le cas d'un fonctionnement du système pour produire de l'hydrogène (SOEC), le fonctionnement étant endothermique, un apport de chaleur est en général assuré pendant tout le fonctionnement du système, celui-ci peut être assuré en fonctionnement stationnaire par l'élément chauffant intégré dans la plaque de serrage inférieure.

Dans le cas d'un fonctionnement du système pour produire de l'électricité pour lequel le fonctionnement est exothermique, il peut être prévu d'alimenter les fils chauffants des deux plaques de serrage pour atteindre la température de fonctionnement et, ensuite, de n'assurer un chauffage permanent dans la plaque de serrage inférieur que pour le réchauffage des gaz.

Dans le cas d'une enceinte isolante thermique très efficace, il peut être envisagé, en fonctionnement stationnaire ou stable, d'interrompre l'apport de chaleur par les éléments chauffants.

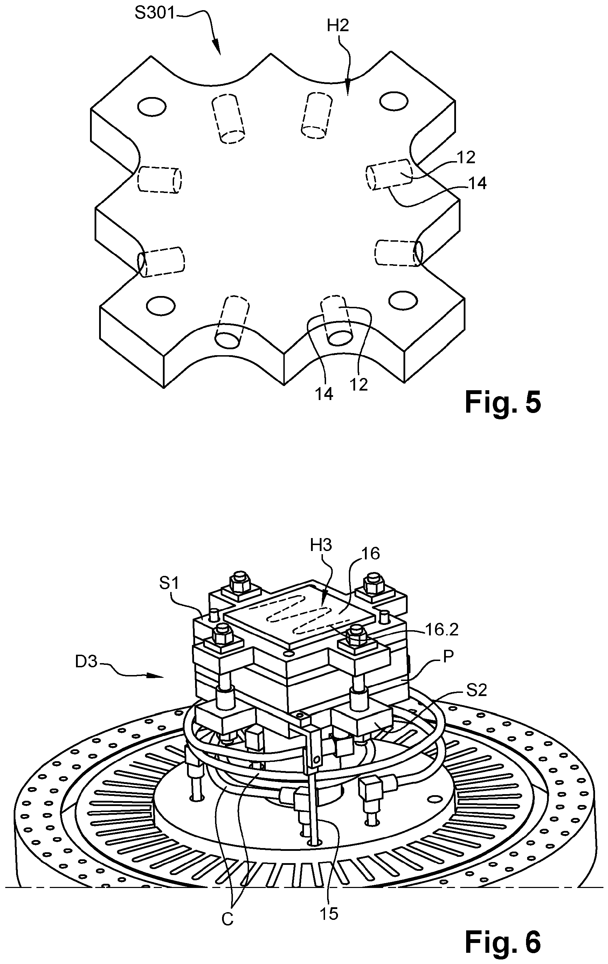

Sur la figure 5, on peut voir un autre exemple de réalisation de plaque de serrage S301 représentée schématiquement munie de moyens de chauffage H2. Les moyens de chauffage H2 comportent des éléments conducteurs électriques en forme de doigts ou pions 12, qui sont insérés latéralement dans les plaques de serrage comme cela est. Les plaques comportent dans leurs bords latéraux des logements 14, par exemple des alésages non débouchants dans lesquels sont montés des éléments conducteurs électriques dissipant de la chaleur. De préférence, les pions ou doigts sont répartis de manière uniforme dans toute la périphérie des plaques. De préférence, le montage des doigts se réalise à force dans les logements 14 afin d'assurer un bon contact thermique entre les doigts et la plaque et réduire les pertes thermiques. En variante, en particulier dans la plaque de serrage supérieure, il peut être envisagé de disposer au moins une partie des doigts perpendiculairement au plan moyen de la plaque de serrage.

Le dispositif électrochimique comporte une deuxième plaque de serrage identique à la plaque de serrage S301. Une gestion différenciée des deux plaques de serrage est alors possible

Le plan moyen de la plaque de serrage est le plan auquel sont sensiblement parallèles les faces de plus grande surface de la plaque de serrage.

De préférence, sur la figure 5 tous les doigts ou pions de chauffants étant réparties de manière régulière dans la plaque de serrage S301, les doigts ou pions chauffants sont de préférence commandés pour générer la même quantité de chaleur afin d'assurer un chauffage uniforme dans toute la section transversale de la plaque de serrage.

Dans le cas d'une répartition non uniforme des doigts ou des pions, alors une gestion différenciée des différents pions peut être envisagée.

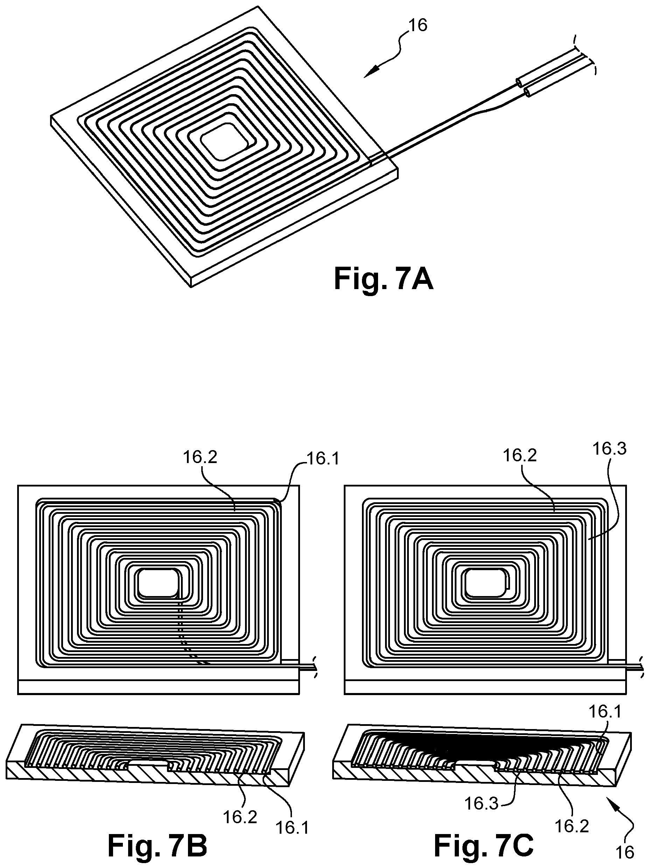

Sur la figure 6, on peut voir un autre exemple de réalisation avantageux de dispositif électrochimique D3, dans lequel les moyens de chauffage H3 sont rapportés sur les plaques de serrage à l'extérieur de celles-ci. Les moyens de chauffage comportent au moins une plaque de chauffage 16 représentée seule sur les figures 7A à 7C. Les éléments chauffants ainsi disposés permettent de maîtriser le gradient thermique dans toute la hauteur de l'empilement.

La plaque de chauffage 16 est par exemple fabriquée suivant le même procédé que les plaques de serrage des figures 2, 3A et 3B. La plaque de chauffage 16 comporte un évidement 16.1 formé dans une de ses faces de plus grande surfaces principales et un câble électrique 16.2 représenté en pointillés disposé dans l'évidement 16.1 et une brasure 16.3 est déposée dans l'évidement 16.1 sur le câble afin d'immobiliser le cordon dans l'évidement. Sur la figure 7B, la brasure n'est pas encore déposée.

La plaque 16 ainsi formée peut alors être montée en contact direct contre la face de plus surface extérieure d'une plaque de serrage S1. De préférence, afin d'assurer un très bon transfert thermique entre la plaque chauffante 16 et la plaque de serrage S2, les faces en contact présentent une très bonne planéité. Par exemple, la plaque de chauffage est mise en contact avec la plaque de serrage de sorte à pouvoir être amovible facilement, i.e. sans être fixée de manière définitive à celle-ci, tout en bénéficiant des moyens de chauffage intégrés à l'empilement. En variante, une couche de matériau ductile offrant une bonne conductivité thermique, par exemple une pâte d'or, est interposée entre la plaque de serrage et la plaque de chauffage, ce qui permet d'améliorer le contact thermique entre la plaque de chauffage et la plaque de serrage, et compenser les défauts de planéité.

En variante, la plaque de chauffage comporte des doigts ou pions chauffants comme dans l'exemple représenté sur la figure 5. Les doigts ou pions peuvent être montés dans les bords latéraux et/ou à travers la face principale extérieure de la plaque de chauffage.

La mise en œuvre de une ou plusieurs plaques de chauffage 16 rapportées sur les plaques de serrage permet d'équiper des dispositifs électrochimiques déjà fabriqués et pour lesquels le retrait des plaques de serrage, soit pour les remplacer par des plaques de serrage avec chauffage intégré, soit pour introduire des plaques de chauffage intercalaire n'est pas possible.

Sur la figure 6, on peut voir les conduits d'alimentation en gaz et de collecte des gaz C et le câble 15 de connexion électrique à une plaque terminale T

En variante, les moyens de chauffage peuvent être intégrés dans l'empilement sous forme de plaques rapportées dans l'empilement. Par exemple, les moyens de chauffage comportent des plaques intercalaires dans lesquelles est intégré un câble chauffant, ces plaques sont disposées entre une plaque de serrage et une plaque terminale.

Selon une autre variante, les plaques intercalaires sont disposées chacune entre deux cellules électrochimiques élémentaires. L'insertion de plaques chauffantes intercalaires permet de réduire les gradients thermiques verticaux au sein de l'empilement. Dans cette variante, soit les plaques intercalaires remplacent des interconnecteurs, soit des moyens de connexion électriques extérieurs permettent d'assurer la connexion électrique entre les cellules.

Un ou des capteurs de température de sécurité et/ou de régulations peuvent être avantageusement disposés dans les plaques de chauffage.

Des thermocouples sont avantageusement disposés dans le ou les plaques de chauffage 16 ou dans la ou les plaques intercalaires.

Suivant le dispositif électrochimique réalisé, si celui-ci ne requiert pas l'application d'une force de serrage dans la direction de l'empilement, les plaques de serrage peuvent être omises.

Il sera compris que les différents exemples des figures 1 à 6 peuvent être combinés. Par exemple les moyens de chauffage peuvent comporter un ou des conducteurs dans une plaque de serrage uniquement et dans une plaque intercalaire. Ou encore les moyens de chauffage comportent une plaque chauffante 16 et une plaque de serrage avec les conducteurs chauffants intégrés.

De manière préférée, le dispositif électrochimique est disposé dans une enceinte de sorte à réduire les pertes énergétiques, notamment thermiques et à optimiser le fonctionnement du dispositif. Par exemple les parois de l'enceinte comportent un ou des matériaux isolants fibreux comprenant du SiO2, du CaO et du MgO ou un ou des matériaux de type béton léger.

Sur la figure 8, on peut voir une représentation schématique d'une installation comprenant un dispositif électrochimique selon l'invention, par exemple le dispositif D2, disposé dans une enceinte 17, l'enceinte étant représentée en coupe.

L'enceinte comporte une sole 18 sur laquelle est disposé le dispositif électrochimique, des parois latérales 20 et une paroi supérieure 22 définissant un volume fermé isolant thermiquement le dispositif électrochimique de l'environnement extérieur.

L'enceinte, en particulier les parois latérales 20 et la paroi supérieure 22 peuvent être réalisées d'un seul tenant ou en plusieurs parties assemblées les unes aux autres. Des ouvertures 24 sont prévues dans l'enceinte pour le passage des tubes et des connecteurs électriques. Les jeux entre les contours des ouvertures et les tubes et les connecteurs sont avantageusement comblés par un matériau isolant thermique. De manière très avantageuse, les connexions fluidiques et les connexions électriques sont réalisées à travers la sole 18 réduisant encore davantage les fuites thermiques.

De préférence, le contour intérieur de l'enceinte est conforme à la forme extérieure du dispositif électrochimique et délimite avec la surface extérieure du dispositif un jeu réduit. Ceci permet à la paroi intérieure de l'enceinte de réfléchir plus efficacement la chaleur émise par le dispositif électrochimique en direction dudit ensemble, et par voie de conséquence, permet de mettre en œuvre des moyens de chauffage de puissance réduite par rapport à ceux traditionnellement utilisés dans ce type d'applications.

Par ailleurs, la combinaison de moyens de chauffage électrique intégrés et d'une enceinte isolante électrique contribue également à réduire les gradients thermiques dans la direction de l'empilement, et à permettre une homogénéisation de la température au sein du dispositif électrochimique, et ainsi améliorer le rendement de ce dernier.

Cette homogénéisation de la température permet d'appliquer une consigne de chauffe aux conducteurs externes intégrés proche de la température de chauffe souhaitée pour l'empilement. Ainsi on limite les risques d'endommagement des éléments du dispositif par surchauffe, notamment des éléments dans la partie supérieure de l'empilement.

Un matériau réfléchissant sur la paroi interne de l'enceinte pourrait être prévu.

De préférence un espace libre est maintenu entre le dispositif électrochimique et la paroi intérieure de l'enceinte pour permettre la détection d'une fuite sur l'empilement. En général, de l'air balaye l'enceinte pour diluer et évacuer les éventuelles fuites d'hydrogène de l'empilement. En outre, il est préférable d'éviter tout contact entre l'enceinte et l'empilement pour réduire le risque de court-circuit.

Un ou des capteurs peut ou peuvent être porté(s) par l'enceinte ou disposé(s) dans l'espace entre l'enceinte et le dispositif électrochimique, il peut s'agir de capteur de température pour réguler la température du dispositif, de capteur de gaz pour détecter une fuite dans le dispositif...

Le dispositif électrochimique selon l'invention présente l'avantage d'être très compact car il ne requiert pas d'être disposé dans un four. En outre il est très facilement utilisable, en effet il peut être aisément connecté aux quatre conduits d'alimentation et de collecte de gaz et à des alimentations électriques pour le système de chauffage intégré et les plaques terminales. Ce dispositif est alors de type « plug and play », i.e. branche et fonctionne.

Dans le cas où le dispositif est logé dans une enceinte, celle-ci est avantageusement de taille réduite puisqu'elle est conformée à la forme du dispositif ce qui est aisément réalisable. L'enceinte peut être assemblée autour du dispositif, contrairement à un four qui comporte sur ses parois intérieures des résistances électriques. De plus les parois sont d'épaisseur réduite car elles ne comportent pas de résistances électriques.

La description de la gestion différenciée des éléments chauffants d'un système sans enceinte s'applique à la gestion différenciée des éléments chauffant d'un système avec enceinte.

Dans les exemples des figures 2, 5 et 6 les éléments chauffants sont disposés dans les plaques de serrage. En variante, en plus des éléments chauffants dans les plaques de serrage, un ou des éléments chauffants sont disposés entre les cellules électrochimiques pour permettre une gestion encore plus fine de la température au sein de l'empilement. Le nombre d'éléments chauffants est choisi en tenant compte de l'épaisseur supplémentaire impliquée, de la consommation électrique qui en résulte, des sources de défaillance potentielles.

Dans les exemples de systèmes décrits, les éléments chauffants sont des éléments électriques. La mise en œuvre de moyens de chauffage de type à effet Joule présente l'avantage de permettre un contrôle aisé de l'énergie thermique générée. D'autres moyens de chauffage peuvent être envisagés comme par exemple le chauffage au moyen de la circulation d'un gaz. Néanmoins ce type de chauffage présente une moins bonne réactivité que des moyens électriques.

Les éléments chauffants peuvent présenter des puissances différentes des capacités à générer de la chaleur différentes. Par exemple dans un empilement comportant des plaques de serrage avec éléments chauffants et des plaques chauffantes intercalaires, il peut être envisagé que les éléments chauffants dans les plaques intercalaires présentes des puissances différentes compatibles avec les besoins.

Dans les exemples de régulation décrits, on cherche à réduire le gradient thermique voire à l'annuler. Néanmoins il peut être envisagé d'imposer des commandes aux éléments chauffants de sorte à créer un gradient thermique au sein de l'empilement. Un procédé de régulation permettant l'établissement d'un tel gradient ne sort pas du cadre de la présente demande. Par exemple, une telle régulation peut être mise en œuvre lorsque l'une des extrémités de l'empilement fonctionne mieux ou moins bien que l'autre, la température de cette extrémité peut alors être diminuée ou augmentée respectivement pour uniformiser les performances des cellules de l'empilement.

## Revendications

1. Procédé de régulation thermique d'un système électrochimique comprenant un empilement de n cellules électrochimiques, n étant un entier supérieur ou égal à 2, les cellules électrochimiques étant des cellules d'électrolyseur à oxyde solide ou des cellules à combustible à oxyde solide, et au moins n-1 plaques d'interconnexion interposées entre les cellules électrochimiques, des moyens d'alimentation en gaz des cellules électrochimiques et des moyens de collecte de gaz produits par les cellules électrochimiques, des moyens de connexion électrique du système vers l'extérieur, dans lequel le dispositif électrochimique comporte également des moyens de chauffage (H, H1, H2, H3) intégrés à l'empilement, lesdits moyens de chauffage comportant au moins un premier et un deuxième élément chauffant (E1, E2), lesdits premier et deuxième éléments chauffants étant électriques, le premier élément chauffant étant disposé dans un premier emplacement de l'empilement et le deuxième élément chauffant étant disposé dans un deuxième emplacement de l'empilement, comportant :
l'application d'une première commande au premier élément chauffant et d'une deuxième commande au deuxième élément chauffant, lesdites première et deuxième commandes étant déterminées de sorte à maintenir un gradient thermique dans l'empilement dans la direction de l'empilement sensiblement à une valeur donnée.

2. Procédé de régulation selon la revendication 1, dans lequel les premier et deuxième éléments chauffants électriques sont de types à effet joule.

3. Procédé de régulation selon la revendication 1 ou 2, dans lequel les première et deuxième commandes varient au cours du fonctionnement du système.

4. Procédé de régulation selon la revendication 1, 2 ou 3, dans lequel le premier emplacement est situé au niveau d'une extrémité de l'empilement par laquelle pénètrent des conduits d'alimentation en gaz des cellules, les gaz étant à une température inférieure à la température de fonctionnement du système, et dans lequel la première commande est telle que le premier élément génère une quantité de chaleur suffisante pour compenser la baisse de température due à l'alimentation en gaz et maintenir le gradient thermique sensiblement à la valeur donnée, la détermination de la première commande prenant avantageusement en compte la ou les températures des gaz d'alimentation et/ou leurs débits.

5. Procédé de régulation selon l'une des revendications 1 à 4, dans lequel au moins dans une phase de démarrage du système, les première et deuxième commandes sont telles que les premier et deuxième éléments chauffants sont à la même température, jusqu'à ce que le système atteigne sa température de fonctionnement.

6. Procédé de régulation selon l'une des revendications 1 à 5, dans lequel la première et/ou la deuxième commande est ou sont déterminées et/ou modifiées en fonction de mesure de caractéristiques de fonctionnement du système.

7. Procédé de régulation selon la revendication précédente comportant :
l'étape de mesure des températures dans au moins deux zones distinctes de l'empilement,
l'étape de comparaison de la différence des températures des deux zones par rapport à une valeur seuil,
l'étape de détermination ou de modification de la première et/ou de la deuxième commande au vu de l'étape de comparaison.

8. Système électrochimique comportant au moins un dispositif électrochimique comprenant un empilement de n cellules électrochimiques, les cellules électrochimiques étant des cellules d'électrolyseur à oxyde solide ou des cellules à combustible à oxyde solide,, n étant un entier supérieur ou égal à 2, et au moins n-1 plaques d'interconnexion interposées entre les cellules électrochimiques, des moyens d'alimentation en gaz des cellules électrochimiques et des moyens de collecte de gaz produits par les cellules électrochimiques, des moyens de connexion électrique du système vers l'extérieur, dans lequel le dispositif électrochimique comporte également des moyens de chauffage (H, H1, H2, H3) intégrés à l'empilement, lesdits moyens de chauffage comportant au moins un premier et un deuxième élément chauffant, lesdits éléments chauffants étant électriques, le premier élément chauffant étant disposé dans un premier emplacement de l'empilement et le deuxième élément chauffant étant disposé dans un deuxième emplacement de l'empilement, ledit système comportant également des moyens de commande configurés pour commander séparément le premier élément chauffant et le deuxième élément chauffant de sorte à permettre un apport de chaleur différent entre le premier emplacement et le deuxième emplacement et à maintenir un gradient thermique dans l'empilement dans la direction de l'empilement sensiblement à une valeur donnée, les premier et deuxième éléments chauffants électriques étant avantageusement de type à effet joule.

9. Système électrochimique selon la revendication 8, dans lequel les moyens de commande sont configurés pour commander les éléments chauffants selon un mode prédéterminé lors de la conception du système électrochimique.

10. Système électrochimique selon la revendication 8 ou 9, comportant des moyens de mesure de la température dans au moins des première et deuxième zones distinctes de l'empilement, et dans lequel les moyens de commande sont configurés pour commander les éléments chauffants de sorte à réduire le gradient thermique dans la direction de l'empilement.

11. Système électrochimique selon l'une des revendications 8 à 10, dans lequel les premier et deuxième éléments chauffants sont disposés chacun dans une plaque, dite plaque de chauffage, disposée dans l'empilement ou sur l'empilement, les plaques de chauffage étant avantageusement disposées chacune à une extrémité de l'empilement dans la direction de l'empilement.

12. Système électrochimique selon l'une des revendications 8 à 10, comportant deux plaques de serrage (S1, S2, S101, S102, S201, S301) disposées chacune à une extrémité de l'empilement dans la direction de l'empilement et des moyens coopérant avec les plaques pour appliquer un effort de serrage aux n cellules et n-1 interconnexions, les premier et deuxième éléments chauffants sont avantageusement disposés chacun dans une plaque, dite plaque de chauffage, disposée dans l'empilement ou sur l'empilement.

13. Système électrochimique selon les revendications 12, dans lequel les plaques de chauffage sont disposées chacune à une extrémité de l'empilement dans la direction de l'empilement et dans lequel chaque plaque de chauffage est formée par une plaque de serrage.

14. Système électrochimique selon les revendications 12, dans lequel chaque plaque de chauffage est en appui contre une plaque de serrage, avantageusement contre sa face extérieure.

15. Système électrochimique selon l'une des revendications 8 à 14, comportant une enceinte (17) isolante thermique définissant un espace intérieur recevant le dispositif électrochimique et l'isolant thermiquement de l'extérieur.

## Patentansprüche

1. Verfahren zur Temperaturregelung eines elektrochemischen Systems, einen Stapel von n elektrochemischen Zellen umfassend, wobei n eine Ganzzahl größer oder gleich 2 ist, wobei die elektrochemischen Zellen Festoxid-Elektrolyseurzellen oder Festoxidbrennstoffzellen sind, und mindestens n-1 Interkonnektor-Platten, die zwischen die elektrochemischen Zellen gesetzt sind, Mittel zur Gasversorgung der elektrochemischen Zellen und Mittel zum Auffangen von Gasen, die von den elektrochemischen Zellen erzeugt werden, und Mittel zum elektrischen Anschluss des Systems nach außen, wobei die elektrochemische Vorrichtung auch in den Stapel integrierte Heizmittel (H, H1, H2, H3) beinhaltet, wobei die Heizmittel mindestens ein erstes und ein zweites Heizelement (E1, E2) beinhalten, wobei die ersten und zweiten Heizelemente elektrisch sind, wobei das erste Heizelement an einer ersten Stelle des Stapels angeordnet ist und das zweite Heizelement an einer zweiten Stelle des Stapels angeordnet ist, beinhaltend:
die Anwendung eines ersten Befehls auf das erste Heizelement und eines zweiten Befehls auf das zweite Heizelement, wobei der erste und zweite Befehl so bestimmt sind, dass ein Temperaturgradient im Stapel in Richtung des Stapels im Wesentlichen auf einem gegebenen Wert beibehalten wird.

2. Verfahren zur Regelung nach Anspruch 1, wobei die ersten und zweiten elektrischen Heizelemente vom Typ Joule-Effekt sind.

3. Verfahren zur Regelung nach Anspruch 1 oder 2, wobei der erste und zweite Befehl während des Betriebs des Systems variieren.

4. Verfahren zur Regelung nach Anspruch 1, 2 oder 3, wobei die erste Stelle im Bereich eines Endes des Stapels gelegen ist, durch das die Gasversorgungskanäle der Zellen dringen, wobei die Gase eine Temperatur unterhalb der Betriebstemperatur des Systems haben, und wobei der erste Befehl derart ist, dass das erste Element eine ausreichende Wärmemenge generiert, um den Temperaturabfall aufgrund der Gasversorgung auszugleichen und den Temperaturgradienten im Wesentlichen auf dem gegebenen Wert beizubehalten, wobei die Bestimmung des ersten Befehls vorteilhafterweise die Temperatur(en) der Versorgungsgase berücksichtigt, und/oder ihre Durchflussmengen.

5. Verfahren zur Regelung nach einem der Ansprüche 1 bis 4, wobei mindestens in einer Phase des Systemstarts der erste und zweite Befehl derart sind, dass die ersten und zweiten Heizelemente die gleiche Temperatur haben, bis das System seine Betriebstemperatur erreicht.

6. Verfahren zur Regelung nach einem der Ansprüche 1 bis 5, wobei der erste und/oder der zweite Befehl in Abhängigkeit von der Messung der Betriebsmerkmale des Systems bestimmt und/oder modifiziert wird.

7. Verfahren zur Regelung nach dem vorhergehenden Anspruch, beinhaltend:
den Schritt der Temperaturmessung in mindestens zwei getrennten Zonen des Stapels,
den Schritt des Vergleichs der Temperaturdifferenzen der zwei Zonen in Bezug auf einen Schwellenwert,
den Schritt der Bestimmung oder Modifizierung des ersten und/oder zweiten Befehls angesichts des Vergleichsschritts.

8. Elektrochemisches System, mindestens eine elektrochemische Vorrichtung beinhaltend, die einen Stapel von n elektrochemischen Zellen umfasst, wobei die elektrochemischen Zellen Festoxid-Elektrolyseurzellen oder Festoxidbrennstoffzellen sind, wobei n eine Ganzzahl größer oder gleich 2 ist, und mindestens n-1 Interkonnektor-Platten, die zwischen die elektrochemischen Zellen gesetzt sind, Mittel zur Gasversorgung der elektrochemischen Zellen und Mittel zum Auffangen von Gasen, die von den elektrochemischen Zellen erzeugt werden, Mittel zum elektrischen Anschluss des Systems nach außen, wobei die elektrochemische Vorrichtung auch in den Stapel integrierte Heizmittel (H, H1, H2, H3) beinhaltet, wobei die Heizmittel mindestens ein erstes und ein zweites Heizelement beinhalten, wobei die Heizelemente elektrisch sind, wobei das erste Heizelement an einer ersten Stelle des Stapels angeordnet ist und das zweite Heizelement an einer zweiten Stelle des Stapels angeordnet ist, wobei das System auch Steuermittel beinhaltet, die konfiguriert sind, um das erste Heizelement und das zweite Heizelement separat so zu steuern, dass eine unterschiedliche Wärmezufuhr zwischen der ersten Stelle und der zweiten Stelle möglich ist und dass ein Temperaturgradient im Stapel in der Richtung des Stapels im Wesentlichen auf einem gegebenen Wert beibehalten wird, wobei die ersten und zweiten elektrischen Heizelemente vorteilhafterweise vom Typ Joule-Effekt sind.

9. Elektrochemisches System nach Anspruch 8, wobei die Steuermittel konfiguriert sind, um die Heizelemente gemäß einem bei der Konzeption des elektrochemischen Systems vorbestimmten Modus zu steuern.

10. Elektrochemisches System nach Anspruch 8 oder 9, Mittel zum Messen der Temperatur in mindestens den getrennten ersten und zweiten Zonen des Stapels beinhaltend, und wobei die Steuermittel konfiguriert sind, um die Heizelemente so zu steuern, dass der Temperaturgradient in der Richtung des Stapels verringert wird.

11. Elektrochemisches System nach einem der Ansprüche 8 bis 10, wobei die ersten und zweiten Heizelemente jeweils in einer Platte, Heizplatte genannt, angeordnet sind, die im Stapel oder auf dem Stapel angeordnet ist, wobei die Heizplatten jeweils vorteilhafterweise an einem Ende des Stapels in der Richtung des Stapels angeordnet sind.

12. Elektrochemisches System nach einem der Ansprüche 8 bis 10, zwei Klemmplatten (S1, S2, S101, S102, S201, S301) beinhaltend, die jeweils an einem Ende des Stapels in der Richtung des Stapels angeordnet sind, und Mittel, die mit den Platten zusammenwirken, um eine Klemmkraft auf die n Zellen und n-1 Interkonnektoren auszuüben, wobei die ersten und zweiten Heizelemente jeweils vorteilhafterweise in einer Platte, Heizplatte genannt, angeordnet sind, die im Stapel oder auf dem Stapel angeordnet ist.

13. Elektrochemisches System nach Anspruch 12, wobei die Heizplatten jeweils an einem Ende des Stapels in der Richtung des Stapels angeordnet sind und wobei jede Heizplatte durch eine Klemmplatte gebildet ist.

14. Elektrochemisches System nach Anspruch 12, wobei jede Heizplatte gegen eine Klemmplatte, vorteilhafterweise gegen ihre Außenseite, anliegt.

15. Elektrochemisches System nach einem der Ansprüche 8 bis 14, ein thermisch isolierendes Gehäuse (17) beinhaltend, das einen Innenraum definiert, der die elektrochemische Vorrichtung aufnimmt und sie thermisch nach außen isoliert.

## Claims

1. Method for thermal regulation of an electrochemical system comprising a stack of n electrochemical cells, n being an integer greater than or equal to 2, the electrochemicals cells being solid-oxide electrolyser cells or solid-oxide fuel cells, and at least n-1 interconnection plates interposed between the electrochemical cells, means for supplying gas to the electrochemical cells and means for collecting gases produced by the electrochemical cells, means for electrical connection of the system to the outside, wherein the electrochemical device also includes heating means (H, H1, H2, H3) integrated in the stack, said heating means including at least a first and a second heating element (E1, E2), said first and second heating elements being electrical, the first heating element being disposed in a first location in the stack and the second heating element being disposed in a second location in the stack, including:
applying a first command to the first heating element and a second command to the second heating element, said first and second commands being determined so as to maintain a thermal gradient in the stack in the direction of the stack substantially at a given value.

2. Regulation method according to claim 1, wherein the first and second electrical heating element (E1, E2) are of the Joule effect type.

3. Regulation method according to claim 1 or 2, wherein the first and second commands vary during the operation of the system.

4. Regulation method according to claim 1, 2 or 3, wherein the first location is situated at one end of the stack through which pipes supplying gas to the cells enter, the gases being at a temperature lower than the operating temperature of the system, and wherein the first command is such that the first element generates a sufficient quantity of heat for compensating for the drop in temperature due to the gas supply and to maintain the thermal gradient substantially at the given value, determination of the first command taking advantageously into account the temperature or temperatures of the feed gases and/or the flow rates thereof.

5. Regulation method according to one of claims 1 to 4, wherein at least in a start-up phase of the system, the first and second commands are such that the first and second heating elements are at the same temperature, until the system reaches its operating temperature.

6. Regulation method according to one of claims 1 to 5, wherein the first and/or the second command is or are determined and/or modified according to a measurement of the operating characteristics of the system.

7. Regulation method according to the preceding claim, including:
the step of measuring the temperatures in at least two distinct regions of the stack,
the step of comparing the difference in the temperatures of the two regions with respect to a threshold value,
the step of determining or modifying the first and/or the second command in the light of the comparison step.

8. Electrochemical system including at least one electrochemical device comprising a stack of n electrochemical cells, the electrochemical cells being solid-oxide electrolyser cells or solid-oxide fuel cells, n being an integer greater than or equal to 2, and at least n-1 interconnection plates interposed between the electrochemical cells, means for supplying gas to the electrochemical cells and means for collecting gases produced by the electrochemical cells, means for electrical connection of the system to the outside, wherein the electrochemical device also includes heating means (H, H1, H2, H3) integrated in the stack, said heating means including at least a first and a second heating element, said heating elements being electrical, the first heating element being disposed in a first location in the stack and the second heating element being disposed in a second location in the stack, said system also including control means configured for separately controlling the first heating element and the second heating element so as to afford a different addition of heat between the first location and the second location and to maintain a thermal gradient in the stack in the direction of the stack substantially at a given value, the first and second electrical heating elements being advantageously of the Joule effect type.

9. Electrochemical system according to claim 8, wherein the control means are configured to control the heating elements in a mode predetermined during the design of the electrochemical system.

10. Electrochemical system according to claim 8 or 9, including means for measuring the temperature in at least first and second distinct regions of the stack, and wherein the control means are configured to control the heating element so as to reduce the thermal gradient in the direction of the stack.

11. Electrochemical system according to one of claims 8 to 10, wherein the first and second heating elements are each disposed in a plate, referred to as a heating plate, disposed in the stack or on the stack, the heating plates being advantageously each disposed at an end of the stack in the direction of the stack.

12. Electrochemical system according to one of claims 8 to 10, including two clamping plates (S1, S2, S101, S102, S201, S301) each disposed at an end of the stack in the direction of the stack and means cooperating with the plates to apply a clamping force to the n cells and n-1 interconnections, the first and second heating elements being advantageously each disposed in a plate, referred to as a heating plate, disposed in the stack or on the stack.

13. Electrochemical system according to claim 12, wherein the heating plates are each disposed at an end of the stack in the direction of the stack and wherein each heating plate is formed by a clamping plate.

14. Electrochemical system according to claim 12, wherein each heating plate is in abutment against a clamping plate, advantageously against the external face thereof.

15. Electrochemical system according to one of claims 8 to 14, including a thermally insulating enclosure (17) defining an internal space receiving the electrochemical device and insulating it thermally from the outside.
